Europäisches Patentamt

**European Patent Office**

Office européen des brevets

(19)

(11) Numéro de publication: **0 1 1 7 863**
**B1**

(12) **FASCICULE DE BREVET EUROPEEN**

(45) Date de publication du fascicule du brevet:
**07.10.87**

(21) Numéro de dépôt: **84870028.2**

(22) Date de dépôt: **22.02.84**

(51) Int. Cl.⁴: **A 01 M 7/00,** B 05 B 1/20,
B 05 B 7/32, A 01 C 23/04

(54) **Procédé de pulvérisation de liquide et dispositif pour la mise en oeuvre de ce procédé.**

(30) Priorité: **23.02.83 BE 210191**

(43) Date de publication de la demande:
**05.09.84 Bulletin 84/36**

(45) Mention de la délivrance du brevet:
**07.10.87 Bulletin 87/41**

(84) Etats contractants désignés:
**AT CH DE FR GB IT LI LU NL SE**

(56) Documents cités:
**AU - A - 30 574**
**DE - C - 907 364**
**FR - A - 947 017**

(73) Titulaire: **Ipsam Machines, Rijkmakerlaan 6,**
**B-2190 Essen (BE)**
Titulaire: **ENGRAIS ROSIER, B-7592 Moustier Hainaut**
**(BE)**

(72) Inventeur: **Delcourt, Georges, rue de Bellefontaine, 5,**
**B-6860 Bièvre (BE)**

(74) Mandataire: **Thirion, Robert et al, Bureau GEVERS**
**S.A. 7, rue de Livourne Bte 1, B-1050 Bruxelles (BE)**

ACTORUM AG

## Description

La présente invention a pour objet un procédé de pulvérisation de liquide, en particulier pulvérisation agricole d'engrais en suspension et surtout d'engrais provoquant, d'une part, une corrosion et/ou une abrasion importantes des organes du matériel d'épandage et, d'autre part, des risques de bouchage des ajutages prévus pour disperser les jets de liquide.

Les procédés connus, les plus généralement utilisés, font appel à des pompes pour réaliser la pulvérisation, ce qui présente divers inconvénients. En effet, comme la plupart des liquides pulvérisés à des fins agricoles sont particulièrement corrosifs et abrasifs, les organes des pompes, même réalisés en alliages spéciaux très coûteux, offrent une résistance très limitée, ce qui provoque des pannes fréquentes auxquelles l'utilisateur du matériel ne peut pas remédier. De plus, l'action de ces pompes, sur les liquides à pulvériser est souvent trop brutale et entraîne régulièrement la rupture d'équilibre entre les phases en présence.

Pour remédier à ces inconvénients, on a pensé à véhiculer le liquide à pulvériser par voie pneumatique et non plus mécanique, ce qui résout les problèmes de la corrosion et l'abrasion des organes mécaniques et ce qui présente également l'avantage de préserver la qualité du gel indispensable à son maintien en suspension. Ainsi, dans les procédés de transport par voie pneumatique décrits dans DE-C 907 364 et FR-A 947 017 et qui correspondent au préambule de la revendication 1, on injecte le fluide sous pression dans la tuyauterie ou buse d'alimentation des jets en amont des ajutages.

Toutefois ce transport par voie pneumatique présente encore l'inconvénient, d'une part, de n'être précis que pour des pulvérisations avec des jets de grande ouverture (ajutages 60–80) et, d'autre part, de nécessiter des vitesses d'épandage relativement élevées si on veut limiter le débit à 600 ou 700 litres par hectare. Si ces contraintes ne portent pas à conséquence pour l'épandage des engrais basiques relativement peu concentrés et qui sont épandus en quantité variant de 800 à 2500 litres à l'hectare, elles compromettent sérieusement la qualité de l'épandage des solutions azotées pures ou des solutions de produits phytopharmaceutiques du fait des débits trop importants.

L'invention a pour but de remédier aux inconvénients susdits et de procurer un procédé de propulsion du liquide par voie pneumatique permettant d'atteindre de très faibles débits à l'hectare, avec des ajutages s'étalant de 10 à 120 et à des vitesses très réduites de l'ordre de 3 km à l'heure, ce procédé permettant en outre, d'une part, d'utiliser des ajutages de section importante pour la pulvérisation de doses moyennes, ce qui évite les risques de bouchage desdits ajutages quel que soit le type de jet employé, tel que jet miroir, jet pinceau, etc. ... et, d'autre part, d'utiliser des ajutages de 10 pour une pulvérisation en un brouillard de fines gouttelettes, ce qui est particulièrement indiqué pour la pulvérisation des produits phytopharmaceutiques.

A cet effet, suivant l'invention, ledit procédé consiste à injecter le fluide sous pression suivant le sens d'écoulement du liquide dans la tuyauterie, dans l'axe de cette dernière et sous une pression qui est égale à la pression du liquide dans la tuyauterie, l'injection dudit fluide étant effectuée à proximité des ajutages dispersant les jets.

L'invention a également pour objet un dispositif pour la mise en œuvre du procédé susdit.

Suivant l'invention, ledit dispositif comprend une cuve hermétique, telle que cuve cylindrique, résistant à la pression et à la dépression, au moins un compresseur d'air d'un débit suffisant pour mettre la cuve sous pression et fournir le fluide sous pression, tel que de l'air, injecté dans la tuyauterie ou buse d'alimentation des jets et pourvu d'un système de décompression pour mettre la cuve en dépression en vue de son remplissage lorsque l'admission d'air dans la cuve interrompue, des moyens d'entraînement du compresseur, un orifice d'admission d'air prévu dans la cuve et relié par une tubulure au compresseur, un orifice d'admission du liquide prévu dans la cuve, au moins une rampe de pulvérisation, un orifice de sortie du liquide prévu dans la cuve et connecté par une tubulure à la rampe de pulvérisation, un orifice de sortie d'air sous pression agencé à la partie supérieure de la cuve, des moyens agencés pour relier cet orifice de sortie d'air à la rampe de pulvérisation et pour injecter l'air dans la tuyauterie des jets, en amont des ajutages de la rampe de pulvérisation et des vannes agencées pour autoriser ou interdire l'écoulement de l'air sous pression et du liquide à travers les orifices précités, ledit dispositif étant caractérisé en ce que les moyens susdits sont agencés pour injecter le fluide sous pression dans le sens d'écoulement du liquide dans la tuyauterie, dans l'axe de celle-ci, sous une pression égale à la pression du liquide et à proximité des ajutages dispersant les jets.

D'autres détails et particularités de l'invention ressortiront de la description des dessins annexés au présent mémoire, qui illustrent le procédé de pulvérisation suivant l'invention et représentent, à titre d'exemple non limitatif, une forme de réalisation particulière du dispositif pour la mise en œuvre de ce procédé.

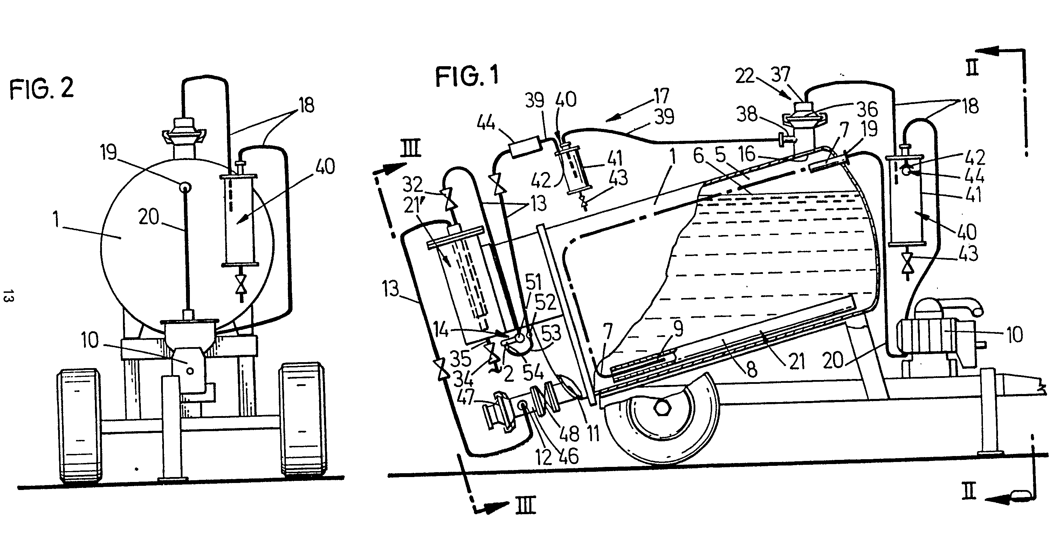

La figure 1 est une vue schématique, en élévation et avec brisures partielles du dispositif de pulvérisation suivant l'invention.

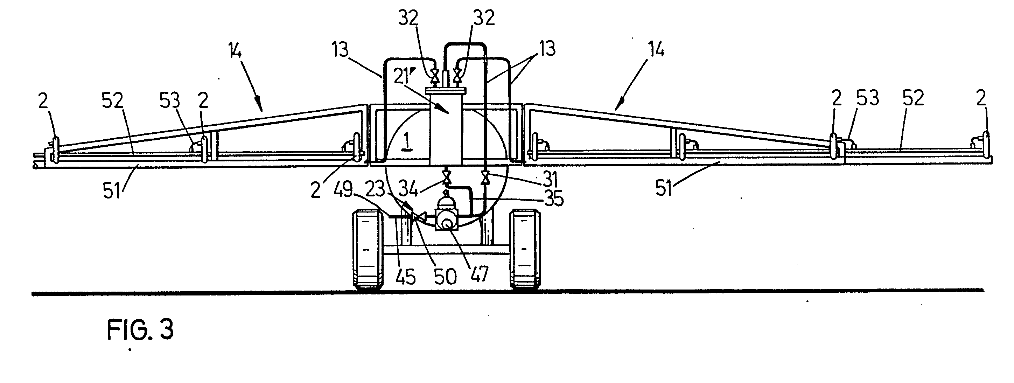

Les figures 2 et 3 sont des vues suivant les lignes II–II et III–III de la figure 1, l'échelle de figure 3 étant différente de celle des figures 1 et 2.

Les figures 4 et 5 sont des vues en élévation et en coupe montrant des détails du dispositif représenté aux figures 1 à 3.

Dans les différentes figures, les mêmes notations de référence désignent des éléments identiques ou analogues.

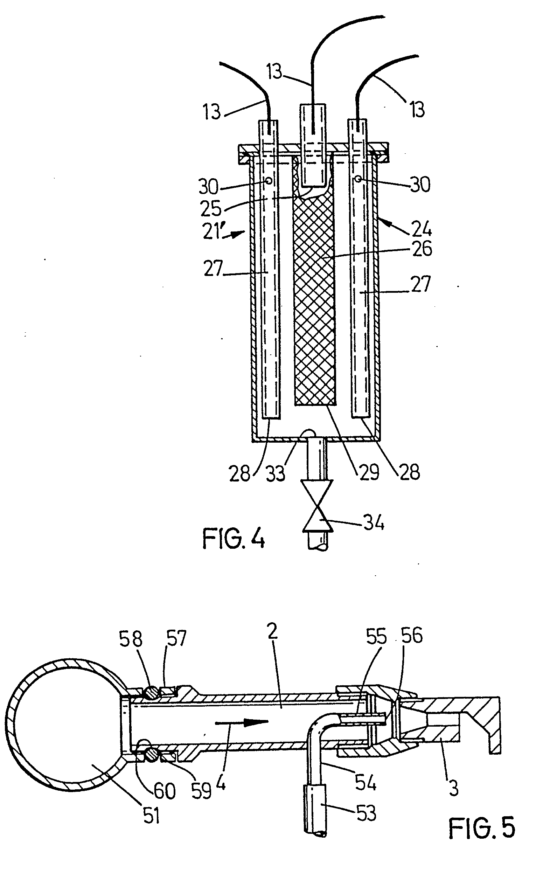

Le procédé suivant l'invention et illustré aux dessins consiste, pour la pulvérisation de liquide et en particulier pour la pulvérisation agricole d'engrais en suspension, à mettre sous pression, par de l'air comprimé, le liquide dans une cuve hermétique 1 et à injecter de l'air sous pression dans la tuyauterie ou buse d'alimentation 2 des jets, en amont des ajutages 3 dispersant ces jets, cet air étant injecté suivant le sens d'écoulement, schématisé par la flèche 4, du liquide dans la buse (figure 5). L'air est injecté dans l'axe de la buse, sa pression est égale à la pression dudit liquide circulant dans la buse 2 et l'injection s'effectue à proximité de l'ajutage 3. Cette façon de faire permet de réaliser des volumes d'épandage de liquide par hectare très faibles avec des ajutages de distribution de grande section réduisant à néant les risques de bouchage des ajutages, du fait que le débit en liquide de la buse est sous la dépendance du rapport volume de liquide/volume d'air injecté, celui-ci étant fonction de la pression d'air et de la dimension des moyens d'injection d'air, ainsi que de la position de ces moyens par rapport aux ajutages 3. Cette façon de faire permet en outre de réaliser, dans les buses 2, un mélange de l'air dans le liquide, ce qui favorise l'écoulement des liquides visqueux et ce qui améliore les caractéristiques du spectre des gouttelettes et la courbe de leur répartition spatiale.

Suivant l'invention, on prélève l'air, qui sera injecté dans les buses 2, à la partie supérieure 5 de la cuve et au-dessus du niveau maximum 6 de liquide dans cette dernière. Pour la mise sous pression du liquide, on introduit l'air sous pression à la partie inférieure de la cuve, en excès pour disposer de l'air qui sera injecté dans les buses 2, de sorte que cet air traverse le liquide contenu de la cuve et provoque une agitation ou brassage du liquide suffisante pour maintenir les produits en suspension, même lorsqu'il s'agit de liquides à pouvoir de sédimentation important.

Suivant l'invention, l'air sous pression est amené à l'intérieur de la cuve 1 par une conduite 7 qui débouche dans un tube 8 fixé au fond de la cuve sensiblement parallèlement à l'axe de cette dernière. La partie 9 de conduite 7 logée dans le tube 8 et ce dernier sont coaxiaux, le diamètre interne du tube étant supérieur au diamètre externe de la conduite afin de créer un passage suffisant entre ces deux éléments pour que le liquide s'écoule librement entre ces derniers, la longueur de la partie 9 de la conduite 7 étant inférieure à celle du tube 8.

Le dispositif d'épandage ou de pulvérisation suivant l'invention, pour la mise en œuvre du procédé susdit, comprend la cuve 1, qui est hermétique et avantageusement cylindrique pour mieux résister à la pression et à la dépression et un compresseur d'air 10, destiné à être entraîné à partir de la prise de force d'un tracteur ou par un moteur indépendant, dont le débit est suffisant pour mettre la cuve et le liquide qu'elle contient sous pression et fournir l'air qui sera injecté dans les buses 2, ce compresseur étant muni d'un système de décompression pour mettre la cuve 1 en dépression en vue de son remplissage quand l'admission d'air est interrompue dans ladite cuve. Celle-ci présente un orifice d'admission 11 du liquide et un orifice de sortie 12 dudit liquide, ce dernier étant connecté par une tubulure 13 à deux rampes de pulvérisation 14 disposées transversalement à l'axe de la cuve, de part et d'autre de celle-ci, et articulées de manière à pouvoir être rabattues le long de la cuve lors des déplacements du dispositif ou de son rangement. La cuve présente, à sa partie supérieure, un orifice 16 de sortie d'air sous pression, et, d'une part, des moyens 17 agencés pour connecter cet orifice 16 aux rampes de pulvérisation 14 et pour injecter l'air dans les buses 2 de ces rampes, en amont des ajutages 3 de ces buses et dans le sens d'écoulement du liquide dans ces dernières et, d'autre part, une tubulure 18 reliant cet orifice 16 au système de décompression du compresseur 10. La cuve 1 présente également un orifice d'admission d'air 19, situé à sa partie supérieure et relié au compresseur par une tubulure 20. Le dispositif comprend aussi des vannes agencées pour autoriser ou interdire l'écoulement de l'air sous pression et du liquide à travers les orifices 11, 12, 16 et 19 susdits.

Pour réaliser le brassage précité du liquide dans la cuve, celle-ci comprend, à sa partie inférieure, des moyens 21 agencés à l'intérieur de ladite cuve pour distribuer l'air sous pression introduit dans la cuve au sein du liquide qu'elle contient, ces moyens étant raccordés à l'orifice d'admission d'air 19 par le conduit 7. Pour filtrer le liquide admis aux rampes de pulvérisation 14 et pour répartir ledit liquide dans ces dernières, le dispositif suivant l'invention comprend des moyens 21 qui seront décrits ci-après et qui sont intercalés dans la tubulure 13 qui relie l'orifice de sortie de liquide 12 aux rampes de pulvérisation 14.

Pour éviter l'introduction de liquide, lors du remplissage de la cuve en liquide par mise en dépression de cette dernière, dans les circuits d'air, le dispositif comprend des moyens 22 associés à l'orifice de sortie d'air sous pression 16 et agencés pour interdire le passage du liquide, à travers cet orifice 16, dans les moyens 17 acheminant l'air vers les rampes de pulvérisation 14 et dans la tubulure 18 reliant la cuve au système de décompression du compresseur 10.

Le dispositif suivant l'invention comprend avantageusement des moyens 23 associés à l'orifice d'admission 11 de liquide dans la cuve 1 et agencés pour permettre l'injection d'un produit dans le liquide admis dans la cuve au cours de son remplissage.

Dans la forme de réalisation du dispositif, représentée aux dessins, les moyens 21 susdits sont constitués, d'une part, par le tube 8 fixé à l'intérieur de la cuve 1 à proximité de son fond, ce tube 8 s'étendant sensiblement parallèlement à l'axe de la cuve et sa longueur étant inférieure à celle de la cuve pour que le liquide puisse circuler librement à l'intérieur du tube et, d'autre part, par le conduit 7 relié à l'orifice 19 d'admission d'air de la cuve. Ce conduit 7 a son extrémité opposée à l'orifice 19 située à l'intérieur du tube 8, la partie 9 dudit conduit 7 qui s'étend dans le tube, à partir d'une des extrémités de ce dernier, est coaxiale au tube, la section externe du conduit 7 étant inférieure à la section interne du tube 8 pour permettre le libre écoulement du liquide entre la paroi externe du conduit et la paroi interne du tube. La longueur de la partie 9 du conduit 7 située dans le tube est inférieure à la longueur du tube, cette première longueur étant de l'ordre de 30 à 40 cm alors que la longueur du tube 8 correspond au moins à la moitié de la longueur de la cuve.

Les moyens 21' assurant la filtration du liquide et sa répartition dans les rampes de pulvérisation 14 comprennent une enceinte hermétique cylindrique 24 (figure 4) dont l'axe est situé dans un plan sensiblement vertical, une ouverture 25 ménagée au sommet de l'enceinte, suivant son axe, à laquelle sont raccordés, d'une part, la tubulure 13 reliant l'orifice 12 aux rampes de pulvérisation 14 pour que le liquide s'écoule de cette tubulure dans l'enceinte 24 pour être filtré et réparti entre deux tubulures 13 reliées auxdites rampes et, d'autre part, un filtre ou tamis tubulaire 26 s'étendant à l'intérieur de l'enceinte, parallèlement à l'axe de celle-ci, depuis l'ouverture 25 jusqu'à proximité de la base de ladite enceinte. Deux tubes 27, parallèles à l'axe de l'enceinte, sont fixés dans cette dernière de part et d'autre et symétriquement par rapport au filtre 26 et raccordés chacun à une tubulure 13 acheminant le liquide filtré dans l'enceinte vers la rampe de pulvérisation correspondante. Les extrémités libres 28 des tubes 27 sont situées à faible distance de la base de l'enceinte 24 et à un niveau légèrement inférieur à celui de l'extrémité 29 du filtre 26. Pour éviter qu'un matelas d'air se forme dans l'enceinte lorsqu'elle se remplit de liquide, les tubes 27 présentent, à proximité du sommet de l'enceinte, une perforation 30 assurant l'écoulement de l'air, ce qui permet de maintenir l'efficacité du filtre 26 sur toute sa hauteur et d'éviter des différences de pression dans le liquide au cours de son transport de la cuve aux rampes de pulvérisation. Pour forcer la majorité du liquide se déversant dans l'enceinte 24 à pénétrer dans les tubes 27 par leurs extrémités 28, afin d'utiliser toute la surface du filtre 26, les perforations 30 susdites ont une section qui est inférieure à la section interne des tubes 27. La section de tubulure 13 reliant l'orifice 12 à l'enceinte 24 est pourvue d'une vanne 31, tandis que les sections de tubulure 13 reliant les tubes 27 aux rampes de pulvérisation 14 comprennent chacune une vanne 32. Enfin, l'enceinte 24 présente, à sa base, un orifice de vidange 33 obturable par une vanne 34. Cet orifice 33 est avantageusement raccordé à la tubulure 13, à proximité de l'orifice 12 et en amont de la vanne 31, par un conduit 35 permettant la vidange de l'enceinte 24 dans la cuve 1 lorsque celle-ci est mise en dépression en vue de son remplissage.

Les moyens 22 susdits associés à l'orifice de sortie d'air 16 de la cuve pour interdire l'introduction de liquide dans les circuits d'air lors du remplissage de la cuve comprennent un clapet coupe-vide 36 connu en soi agencé sur l'orifice 16 et dont l'organe de fermeture est avantageusement, suivant l'invention, constitué par une balle en matière synthétique résistant bien à la corrosion et suffisamment déformable pour s'appliquer hermétiquement, lorsqu'elle est commandée par le liquide lors de sa montée dans la cuve, sur le siège du clapet, même si ce siège présente des incrustations. L'orifice de sortie d'air 37 du clapet 36 relié par la tubulure 18 au système de décompression du compresseur et l'orifice de sortie d'air 38 du clapet 36 relié par une tubulure 39 aux rampes de pulvérisation 14 sont situés en aval de l'organe de fermeture du clapet 36. Les tubulures 18 et 39 sont avantageusement pourvues, suivant l'invention, de moyens de sécurité 40 agencés pour capter du liquide qui s'échapperait à travers le clapet 36 lorsque celui-ci est fermé quand la cuve 1 a atteint son niveau de remplissage maximum. Chacun de ces moyens 40 est constitué par une enceinte 41 hermétique intercalée dans les tubulures 18 ou 39 et à l'intérieur de laquelle débouche la tubulure 18 ou 39 en provenance de l'orifice de sortie d'air 37 ou 38, ladite tubulure 18 ou 39 reliant l'enceinte 41 au compresseur ou aux rampes 14 étant connectée à une ouverture 42 prévue dans l'enceinte à son niveau le plus haut, une purge, munie d'une vanne 43, étant prévue à la base de l'enceinte 41. Des moyens 44, tels que siège obturable par une balle comme décrite ci-avant, étant agencés dans l'enceinte 41 pour obturer l'ouverture 42, sous l'action du liquide, en cas de montée du liquide dans l'enceinte et lorsqu'il a atteint un niveau inférieur à celui de l'ouverture 42. Suivant l'invention, un clapet antiretour 44 est prévu entre l'enceinte 41 intercalée sur la tubulure 39 et les rampes 14 pour éviter que du liquide ne soit aspiré des rampes dans les circuits d'air lorsque la cuve est mise en dépression en vue de son remplissage.

Les moyens 23 précités pour injecter un produit dans le liquide admis dans la cuve lors de son remplissage sont constitués par un conduit 45 raccordé à une buselure 46 fixée à la cuve 1 autour de l'orifice 11 et à travers laquelle circule le liquide admis dans la cuve, l'extrémité libre de la buselure étant pourvue d'un organe d'obturation 47 et une vanne 48 étant prévue sur la buselure entre l'orifice 11 et cet organe 47, le conduit 45 débouchant dans la buselure 46 entre cet organe d'obturation 47 et la vanne 48 et comprenant, à son extrémité libre 49, un moyen de raccordement à une source de produit à injecter et une vanne de fermeture 50 située entre cette extrémité 49 et le raccordement du conduit 45 à la buselure 46.

Suivant l'invention, chacune des rampes de pulvérisation 14 comprend un tube rigide 51 d'axe sensiblement horizontal s'étendant transversalement par rapport à la cuve en position de pulvérisation, les buses de pulvérisation 2 telles que buses miroir, régulièrement répartie le long dudit tube 51 et s'étendant perpendiculairement à l'axe de ce dernier, un tube rigide 52, pour l'écoulement de l'air sous pression, disposée parallèlement au tube à liquide 51, des ouvertures ménagées dans le tube à air pour correspondre aux buses de pulvérisation, un raccord 53 reliant chacune de ces ouvertures à un conduit d'air 54 fixé à la buse de pulvérisation correspondante, ce conduit 54 présentant une partie coaxiale 55 à la buse de pulvérisation et l'extrémité libre 56 de cette partie étant, d'une part, située en amont de l'ajutage 3 de la buse 2 et, d'autre part, agencée pour que l'air sous pression circulant dans le conduit soit injecté dans le sens du liquide circulant dans la buse 2. L'axe des buses 2 fait avantageusement un angle de l'ordre de 35 degrés avec un plan horizontal passant par l'axe du tube 51 de manière à ce que les ajutages 3 de ces buses soient situés à un niveau supérieur à celui de ce plan.

Suivant l'invention, les buses 2 sont avantageusement montées sur le tube 51 de manière amovible. Les buses 2 sont introduites dans des buselures 57 (figure 5) fixées au tube 51 et maintenues dans ces dernières par des organes élastiques 58, ceux-ci étant maintenus dans des saignées 59 réalisées dans les buselures 57 et dans une rainure périphérique 60 correspondante ménagée dans les tubes.

Il doit être entendu que l'invention n'est nullement limitée à la forme de réalisation décrite et que bien des modifications peuvent être apportées à cette dernière sans sortir du cadre du présent brevet.

C'est ainsi qu'au lieu d'air, on pourrait injecter dans les buses 2 un gaz ou un liquide.

On pourrait également appliquer le procédé suivant l'invention aux dispositifs de pulvérisation dans lesquels le liquide est propulsé par une pompe, le fluide, tel que de l'air, liquide, etc. ..., injecté dans les buses 2 étant soit mis sous pression par un compresseur, soit propulsé par une pompe distincte de celle qui assure la propulsion du liquide.

## Revendications

1. Procédé de pulvérisation de liquide, en particulier pulvérisation agricole d'engrais en suspension, suivant lequel on injecte un fluide sous pression dans la tuyauterie ou buse d'alimentation (2) des jets, en amont des ajutages (3) dispersant ces derniers, ledit procédé étant caractérisé en ce qu'on injecte le fluide sous pression suivant le sens d'écoulement du liquide dans la tuyauterie (2), dans l'axe de cette dernière et sous une pression qui est égale à la pression du liquide dans la tuyauterie (2), l'injection dudit fluide étant effectuée à proximité des ajutages (3) dispersant les jets.

2. Procédé de pulvérisation suivant la revendication 1, caractérisé en ce que le liquide à épandre est mis sous pression dans une cuve (1) par de l'air comprimé.

3. Procédé de pulvérisation suivant l'une ou l'autre des revendications 1 et 2, caractérisé en ce que le fluide injecté dans la tuyauterie susdite est de l'air sous pression.

4. Procédé de pulvérisation suivant la revendication 3, caractérisé en ce qu'on prélève l'air, injecté dans la tuyauterie (2) susdite, à la partie supérieure (5) de la cuve (1) dans laquelle le liquide est mis sous pression.

5. Procédé de pulvérisation suivant l'une ou l'autre des revendications 3 et 4, caractérisé en ce que, pour la mise sous pression du liquide, on introduit l'air sous pression à la partie inférieure de la cuve (1) de manière à ce que l'air sous pression, dont une partie sera prélevée à la partie supérieure (5) de la cuve pour être injecté dans la tuyauterie (2), traverse le liquide contenu dans la cuve pour provoquer une agitation ou brassage dudit liquide.

6. Procédé de pulvérisation suivant la revendication 5, caractérisé en ce qu'on amène l'air sous pression dans la cuve (1) par une conduite (7) introduite à l'intérieur d'un tube (8) par une des extrémités de celui-ci, le tube étant fixé à la partie inférieure de la cuve sensiblement parallèlement au fond de cette dernière, cette conduite (7), d'un diamètre externe inférieur au diamètre interne du tube (8) pour que le liquide puisse circuler librement entre la conduite et la paroi interne du tube, étant coaxiale au tube (8) et la longueur de sa partie (9) située à l'intérieur du tube (8) étant inférieure à la longueur du tube, cette dernière longueur étant inférieure à la dimension de la cuve prise parallèlement à l'axe du tube et au niveau de cet axe.

7. Dispositif pour la pulvérisation d'un liquide pour la mise en œuvre du procédé susdit et comprenant une cuve hermétique (1), telle que cuve cylindrique, résistant à la pression et à la dépression, au moins un compresseur d'air (10) d'un débit suffisant pour mettre la cuve sous pression et fournir le fluide sous pression, tel que de l'air, injecté dans la tuyauterie ou buse (2) d'alimentation des jets et pourvu d'un système de décompression pour mettre la cuve en dépression en vue de son remplissage lorsque l'admission d'air dans la cuve est interrompue, des moyens d'entraînement du compresseur (10), un orifice d'admission d'air (19) prévu dans la cuve et relié par une tubulure (20) au compresseur (10), un orifice d'admission (11) du liquide prévu dans la cuve, au moins une rampe de pulvérisation (14), un orifice de sortie (12) du liquide prévu dans la cuve et connecté par une tubulure (13) à la rampe de pulvérisation ou d'épandage (14), un orifice (16) de sortie d'air sous pression agencé à la partie supérieure de la cuve, des moyens (17) agencés pour relier cet orifice de sortie d'air (16) à la rampe de pulvérisation (14) et pour injecter l'air dans la tuyauterie (2) des jets, en amont des ajutages (3) de la rampe de pulvérisation (14) et des vannes agencées pour autoriser ou interdire l'écoulement de l'air sous pression et du liquide à travers les orifices (11, 12, 16 et 19) précités, ledit dispositif étant caractérisé en ce que les moyens (17) susdits sont agencés pour injecter le fluide sous pression dans le sens d'écoulement du liquide dans la tuyauterie (2), dans l'axe de celle-ci, sous une pression égale à la pression du liquide et à proximité des ajutages (3) dispersant les jets.

8. Dispositif suivant la revendication 7, caractérisé en ce que l'orifice (16) de sortie d'air précité est relié par une tubulure (18) au système de décompression du compresseur (10).

9. Dispositif suivant l'une ou l'autre des revendications 7 et 8, caractérisé en ce que la cuve (17) comprend des moyens (21) agencés à l'intérieur de la cuve et à sa partie inférieure, pour distribuer l'air sous pression introduit dans la cuve au sein du liquide contenu dans cette dernière, ces moyens (21) étant raccordés à l'orifice d'admission d'air (19) susdit.

10. Dispositif suivant l'une quelconque des revendications 7 à 9, caractérisé en ce qu'il comprend, intercalés dans la tubulure (13) précitée reliant l'orifice de sortie (12) de liquide ménagé dans la cuve à la rampe de pulvérisation (14), des moyens (21') agencés pour filtrer le liquide admis à la rampe de pulvérisation (14) et pour répartir le liquide dans cette dernière.

11. Dispositif suivant l'une quelconque des revendications 7 à 10, caractérisé en ce qu'il comprend des moyens (22) associés à l'orifice de sortie d'air sous pression (16) susdit et agencés pour interdire, lors du remplissage en liquide de la cuve (1) par mise en dépression de cette dernière, le passage dudit liquide, à travers cet orifice (16), dans les moyens (17) reliant la cuve (1) à la rampe de pulvérisation (14) et dans la tubulure (18) reliant la cuve au système de décompression du compresseur (10).

12. Dispositif suivant l'une quelconque des revendications 7 à 11, caractérisé en ce qu'il comprend des moyens (23) associés à l'orifice d'admission (11) du liquide dans la cuve (1) et agencés pour injecter un produit dans le liquide admis dans la cuve (1) lors du remplissage de cette dernière.

13. Dispositif suivant l'une quelconque des revendications 9 à 12, caractérisé en ce que les moyens (21) susdits agencés pour distribuer l'air sous pression introduit dans la cuve (1) au sein du liquide contenu dans cette dernière comprennent, d'une part, un tube (8) fixé à l'intérieur de la cuve (1) à proximité de son fond, ce tube (8) s'étendant sensiblement parallèlement à l'axe de la cuve et sa longueur étant inférieure à cette de la cuve pour que le liquide puisse circuler librement à l'intérieur du tube et, d'autre part, un conduit (7) relié à l'orifice (19) d'admission d'air de la cuve, ce conduit (7) ayant son extrémité opposée audit orifice (19) située à l'intérieur du tube (8), la partie (9) dudit conduit (7) s'étendant dans le tube, à partir d'une extrémité de ce dernier, étant coaxiale au tube, la section externe du conduit (7) étant inférieure à la section interne du tube (8) pour permettre le libre écoulement du liquide entre la paroi externe du conduit et la paroi interne du tube, la longueur de la partie (9) du conduit (7) située dans le tube étant inférieure à la longueur du tube.

14. Dispositif suivant l'une quelconque des revendications 10 à 13, caractérisé en ce que les moyens (21') précités, intercalés dans la tubulure (13) reliant l'orifice de sortie (12) de liquide ménagé dans la cuve à la rampe de pulvérisation (14), comprennent une enceinte hermétique (24) dont l'axe est situé dans un plan sensiblement vertical, une ouverture (25) ménagée au sommet de l'enceinte à laquelle sont raccordés, d'une part, la tubulure (13) en provenance de l'orifice de sortie du liquide de la cuve et, d'autre part, un filtre ou tamis tubulaire (26) s'étendant à l'intérieur de l'enceinte, parallèlement à l'axe de cette dernière, depuis l'ouverture (25) jusqu'à proximité de la base de l'enceinte, au moins un tube (27), d'axe parallèle à celui de l'enceinte, fixé dans cette dernière de manière à ce qu'une de ses extrémités soit située à faible distance de la base de l'enceinte et que son autre extrémité débouche à l'extérieur de l'enceinte, au sommet de cette dernière, la tubulure (13) reliant l'enceinte (24) à la rampe de pulvérisation (14) étant branchée sur cette dernière extrémité, ce tube (27) présentant une perforation (30) réalisée dans sa paroi et située à l'intérieur de l'enceinte (24) à proximité du sommet de celle-ci, la section de cette perforation (30) étant inférieure à la section interne du tube (27), un orifice de vidange (33) de l'enceinte (24), obturable par une vanne (34), étant prévu à la base de ladite enceinte.

15. Dispositif suivant l'une quelconque des revendications 11 à 14, caractérisé en ce que les moyens (22) précités, associés à l'orifice de sortie d'air (16) de la cuve (1) pour interdire le passage du liquide dans les circuits d'air lors du remplissage en liquide de la cuve, comprennent un clapet coupe-vide (36) agencé sur ledit orifice (16) de sortie et dont l'organe de fermeture est commandé par le niveau de liquide dans la cuve (1), l'orifice de sortie d'air relié par la tubulure (18) susdite au système de décompression du compresseur (10) et l'orifice de sortie d'air (16) relié par une tubulure à la rampe de pulvérisation (14) étant situés en aval dudit organe de fermeture.

16. Dispositif suivant la revendication 15, caractérisé en ce que la tubulure reliant l'orifice de sortie d'air au système de décompression du compresseur et la tubulure reliant l'orifice de sortie d'air à la rampe de pulvérisation comprennent des moyens de sécurité (40) agencés pour capter du liquide qui s'échapperait à travers le clapet coupe-vide (36) lorsque ce dernier est fermé lorsque la cuve (1) a atteint son niveau de remplissage maximum.

17. Dispositif suivant la revendication 16, caractérisé en ce que les moyens de sécurité (40) susdit sont chacun constitués par une enceinte (41) hermétique à l'intérieur de laquelle débouche la tubulure (18 ou 39) en provenance de l'orifice de sortie d'air, la tubulure reliant cette enceinte (41) soit au compresseur (10), soit à la rampe de pulvérisation (14), étant connectée à une ouverture (42) prévue dans l'enceinte (41) à son niveau le plus haut, une purge, munie d'un moyen de fermeture (43), étant prévue à la base de l'enceinte.

18. Dispositif suivant la revendication 17, caractérisé en ce que des moyens (44) sont prévus dans l'enceinte (41) pour obturer l'ouverture (42) susdite, ces moyens étant agencés pour être commandés par le liquide contenu dans l'enceinte lorsqu'il atteint un niveau inférieur à celui de ladite ouverture.

19. Dispositif suivant l'une quelconque des revendications 12 à 18, caractérisé en ce que les moyens (23) associés à l'orifice d'admission (11) du liquide pour injecter un produit dans le liquide admis dans la cuve (1) lors de son remplissage sont constitués par un conduit (45) raccordé à une buselure (46) fixée à la cuve (1) autour dudit orifice (11) et à travers laquelle circule le liquide admis dans la cuve, l'extrémité libre de la buselure étant pourvue d'un organe d'obturation (47) et une vanne (48) étant prévue sur la buselure entre l'orifice (11) et cet organe (47), le conduit (45) précité débouchant dans la buselure (46) entre cet organe d'obturation (47) et la vanne (48) et comprenant, à son extrémité libre (49), un moyen de raccordement à une source de produit à injecter et une vanne de fermeture (50), située entre cette extrémité libre (49) et le raccordement du conduit (45) à la buselure (46).

20. Dispositif suivant l'une quelconque des revendications 7 à 19, caractérisé en ce que la rampe de pulvérisation (14) pour l'écoulement du liquide comprend au moins un tube rigide (51) d'axe sensiblement horizontal s'étendant transversalement par rapport à la cuve (1) en position de pulvérisation, des buses de pulvérisation (2) régulièrement répartie le long dudit tube et s'étendant perpendiculairement à l'axe de ce dernier, un tube rigide (52), pour l'écoulement de l'air sous pression, disposé parallèlement au tube à liquide (51), des ouvertures ménagées dans le tube à air pour correspondre aux buses de pulvérisation, un raccord (53) reliant chacune de ces ouvertures à un conduit d'air (54) fixé à la buse de pulvérisation correspondante, ce conduit (54) présentant une partie coaxiale (55) à la buse de pulvérisation et l'extrémité libre (50) de cette partie étant, d'une part, située en amont de l'ajutage (3) de la buse (2) et, d'autre part, agencée pour que l'air sous pression circulant dans le conduit soit injecté dans le sens du liquide circulant dans la buse (2).

21. Dispositif suivant l'une quelconque des revendications 7 à 20, caractérisé en ce que les buses (2) susdites sont des buses miroir.

22. Dispositif suivant la revendication 21, caractérisé en ce que l'axe des buses (2) fait un angle de l'ordre de 35 degrés avec un plan horizontal passant par l'axe du tube (51) d'écoulement de liquide de la rampe de pulvérisation, l'ajutage (3) desdites buses étant situé à un niveau supérieur à celui de ce plan.

23. Dispositif suivant l'une quelconque des revendications 20 à 22, caractérisé en ce que les buses (2) sont montées sur le tube (51) d'écoulement de liquide susdit de manière amovible, les raccords (53) précités, reliant le tube (52) d'écoulement d'air de la rampe aux conduits d'air (54) des buses, étant souples.

**Patentansprüche**

1. Verfahren zum Zerstäuben einer Flüssigkeit, insbesondere landwirtschaftliche Zerstäubung von Düngemittel in Suspension, gemäss dem man ein Fluid unter Druck in die Speiseleitung oder -düse (2) von Strahlen oberhalb von Ansatzrohren (3) injiziert, die diese letzteren zerstäuben, wobei dieses Verfahren dadurch gekennzeichnet ist, dass man das Fluid unter Druck gemäss der Ausflussrichtung der Flüssigkeit in die Leitung (2), in der Achse der letzteren und unter einem Druck injiziert, der gleich dem Druck der Flüssigkeit in der Leitung (2) ist, wobei die Injektion dieses Fluids in der Nähe der Ansatzrohre (3), welche die Strahlen zersträuen, durchgeführt wird.

2. Verfahren zum Zerstäuben gemäss Anspruch 1, dadurch gekennzeichnet, dass die auszustreuende Flüssigkeit in einem Behälter (1) durch komprimierte Luft unter Druck gesetzt wird.

3. Verfahren zum Zerstäuben gemäss Anspruch 1 oder 2, dadurch gekennzeichnet, dass das in die vorerwähnte Leitung injizierte Strömungsmittel Luft unter Druck ist.

4. Verfahren zum Zerstäuben gemäss Anspruch 3, dadurch gekennzeichnet, dass man die Luft, die in die vorerwähnte Leitung (2) injiziert wird, dem obereil Teil (5) des Behälters (1) entnimmt, in dem die Flüssigkeit unter Druck gesetzt wird.

5. Verfahren zum Zerstäuben gemäss Anspruch 3 oder 4, dadurch gekennzeichnet, dass man zum Unterdrucksetzen der Flüssigkeit Luft unter Druck in den unteren Teil des Behälters (1) in der Weise einführt, dass die Luft unter Druck, von der ein Teil aus dem oberen Teil (5) des Behälters entnommen wird, um in die Leitung (2) injiziert zu werden, die in dem Behälter enthaltene Flüssigkeit durchquert, um eine Bewegung oder ein Durcheinandergeraten der erwähnten Flüssigkeit zu verursachen.

6. Verfahren zum Zerstäuben gemäss Anspruch 5, dadurch gekennzeichnet, dass man die Luft unter Druck in den Behälter (1) durch eine Leitung (7) einbringt, die in das Innere eines Rohrs (8) durch eines der enden desselben eingeführt ist, wobei das Rohr an dem unteren Teil des Behälters im wesentlichen parallel zum Boden desselben befestigt ist, wobei diese Leitung (7), die einen äusseren Durchmesser hat, der kleiner als der innere Durchmesser des Rohrs (8) ist, damit die Flüssigkeit (3) zwischen der Leitung und der inneren Wand des Rohrs zirkulieren kann, koaxial zu dem Rohr (8) ist und die Länge ihres Teils (9), der sich im Inneren des Rohrs (8) befindet, kleiner als die Länge des Rohrs ist, und wobei letztere Länge kleiner als die Dimension des Behälters, parallel zu der Achse des Rohrs und auf dem Niveau dieser Achse genommen, ist.

7. Vorrichtung zum Zerstäuben einer Flüssigkeit zur Durchführung des vorerwähnten Verfahrens und umfassend einen dichten Behälter (1), wie einen zylindrischen Behälter, welcher für den Druck und den Unterdruck widerstandsfähig ist, wenigstens einen Luftkompressor (10) mit einer Leistung, die ausreicht, den Behälter unter Druck zu setzen und das Fluid unter Druck zu liefern, wie Luft, das in die Speiseleitung oder -düse (2) von Strahlen injiziert wird, und versehen mit einem Dekompressionssystem zum Setzen des Behälters unter Unterdruck im Hinblick auf seine Füllung, wenn der Einlass von Luft in den Behälter unterbrochen wird, Mittel zum Antrieb des Kompressors (10), eine Einlassöffnung für Luft (19), die in dem Behälter vorgesehen und durch eine Rohrleitung (20) mit dem Kompressor (10) verbunden ist, eine Einlassöffnung (11) für Flüssigkeit, die in dem Behälter vorgesehen ist, wenigstens eine Zerstäubungsrampe (14), eine Austrittsöffnung (12) für Flüssigkeit, die in dem Behälter vorgesehen und durch eine Rohrleitung (13) mit dem Zerstäubungs- oder Berieselungsrampe (14) verbunden ist, eine Austrittsöffnung (16) für Luft unter Druck, die in dem oberen Teil des Behälters angeordnet ist, Mittel (17), angeordnet zum Verbinden dieser Öffnung für den Austritt von Luft (16) mit der Zerstäubungsrampe (14) und zum Injizieren von Luft in die Leitung (2) von Strahlen oberhalb von Ansatzrohren (3) der Zerstäubungsrampe (14) und Ventile, die zum Freigeben oder Sperren des Ausfliessens von Luft unter Druck und von Flüssigkeit durch die vorerwähnten Öffnungen (11, 12, 16 und 19) angeordnet sind, wobei diese Vorrichtung dadurch gekennzeichnet ist, dass die vorerwähnten Mittel (17) zum Injizieren des Fluids unter Druck in der Richtung des Ausflusses der Flüssigkeit in der Leitung (2) in der Achse derselben unter einem Druck, der gleich dem Druck der Flüssigkeit ist, und in der Nähe der Ansatzrohre (3), welche die Strahlen zerstreuen, angeordnet sind.

8. Vorrichtung gemäss Anspruch 7, dadurch gekennzeichnet, dass die vorerwähnte Austrittsöffnung (16) für Luft durch eine Rohrleitung (18) mit dem Dekompressionssystem des Kompressors (10) verbunden ist.

9. Vorrichtung gemäss Anspruch 7 oder 8, dadurch gekennzeichnet, dass der Behälter (1) Mittel (21) enthält, die im Inneren des Behälters angeordnet sind, sowie in seinem unteren Teil, und zwar zum Verteilen der Luft unter Druck, welche in den Behälter eingeführt wird, in das innere der Flüssigkeit, die in diesem letzteren enthalten ist, wobei diese Mittel (21) mit der obenerwähnten Einlassöffnung für Luft (19) verbunden sind.

10. Vorrichtung gemäss irgendeinem der Ansprüche 7 bis 9, dadurch gekennzeichnet, dass sie, eingeschaltet in die vorgenannte Rohrleitung (13), welche die Austrittsöffnung (12) für in dem Behälter angeordneter Flüssigkeit mit der Zerstäubungsrampe (14) verbindet, Mittel (21′) enthält, die zum Filtern der Flüssigkeit, welche in die Zerstäubungsrampe (14) eingelassen wird, und zum Verteilen der Flüssigkeit in dieser letzteren eingerichtet sind.

11. Vorrichtung gemäss irgendeinem der Ansprüche 7 bis 10, dadurch gekennzeichnet, dass die Mittel (22) umfasst, die mit der Austrittsöffnung von Luft unter Druck (16) verbunden und zum Sperren des Durchgangs der erwähnten Flüssigkeit durch diese Öffnung (16) während der Füllung des Behälters (1) mit Flüssigkeit durch Unterdrucksetzen des letzteren, in den Mitteln (17), welche den Behälter (1) mit der Zerstäubungsrampe (14) verbinden, und in der Rohrleitung, welche den Behälter mit dem Dekompressionssystem des Kompressors (10) verbindet, angeordnet sind.

12. Vorrichtung gemäss irgendeinem der Ansprüche 7 bis 11, dadurch gekennzeichnet, dass die Mittel (25) umfasst, die mit der Einlassöffnung (11) für Flüssigkeit in den Behälter (1) verbunden und zum Injizieren eines Produkts in die in den Behälter (1) eingelassene Flüssigkeit während der Füllung des letzteren eingerichtet sind.

13. Vorrichtung nach irgendeinem der Ansprüche 9 bis 12, dadurch gekennzeichnet, dass die Mittel (21), die für die Verteilung von Luft unter Druck, welche in den Behälter (1) in das Innere der in diesem letzteren enthaltenen Flüssigkeit eingerichtet sind, einerseits ein Rohr (8) umfassen, das im Inneren des Behälters (1) in der Nähe seines Bodens befestigt ist, wobei sich dieses Rohr (8) im wesentlichen parallel zu der Achse des Behälters erstreckt und seine Länge kleiner als diejenige des Behälters ist, damit die Flüssigkeit frei in dem Inneren des Rohrs zirkulieren kann, und andererseits eine Leitung (7), die mit der Einlassöffnung (19) für Luft des Behälters verbunden ist, wobei diese Leitung (7) ihr der erwähnten Öffnung (19) entgegengesetztes Ende in dem Inneren des Rohrs (8) angeordnet hat, wobei sich der Teil (9) dieser Leitung (7), der sich in dem Rohr, ausgehend von einem Ende des letzteren, erstreckt, koaxial zu dem Rohr ist, wobei der Aussenquerschnitt der Leitung (7) kleiner als der Innenquerschnitt des Rohrs (8) ist, um den freien Ausfluss der Flüssigkeit zwischen der äusseren Wand der Leitung und der inneren Wand des Rohrs zu ermöglichen, und wobei die Länge des Teils (9) der Leitung (7), der sich in dem Rohr befindet, kleiner als die Länge des Rohrs ist.

14. Vorrichtung nach irgendeinem der Ansprüche 10 bis 13, dadurch gekennzeichnet, dass die Mittel (21′), welche in die Rohrleitung (13) eingeschaltet sind, die die Austrittsöffnung (12) für in dem Behälter angeordnete Flüssigkeit mit der Zerstäubungsrampe (14) verbindet, eine dichte Umfassung (24) umfasst, deren Achse in einer im wesentlichen vertikalen Ebene angeordnet ist, wobei eine Öffnung (25) am Kopf der Umfassung angeordnet ist, mit welcher einerseits die von der Austrittsöffnung der Flüssigkeit des Behälters herkommende Rohrleitung (13) und andererseits ein rohrförmiges Filter oder Sieb (26) verbunden ist, das sich in dem Inneren der Umfassung parallel zu der Achse dieser letzteren von der Öffnung (25) bis in die Nähe der Basis der Umfassung erstreckt, wobei wenigstens ein Rohr (27), dessen Achse parallel zu derjenigen der Umfassung ist, in dieser letzteren in der Weise befestigt ist, dass sich das eine seiner Enden in einem geringen Abstand von der Basis der Umfassung befindet und dass sein anderes Ende in das Äussere der Umfassung am Kopf dieser letzteren herauskommt, wobei die Rohrleitung (13), welche die Umfassung (24) mit der Zerstäubungsrampe (14) verbindet, auf diesem letzteren Ende verzweigt ist, wobei das Rohr (27) eine Perforation aufweist, die in seiner Wand vorgesehen ist und sich im Inneren der Umfassung (24) in der Nähe des Kopfes derselben befindet, wobei der Querschnitt dieser Perforation (30) kleiner als der Innenquerschnitt des Rohrs (27) ist, und wobei eine Auslassöffnung (33) der Umfassung (24), die durch ein Ventil (34) verschliessbar ist, an der Basis der Umfassung vorgesehen ist.

15. Vorrichtung nach irgendeinem der Ansprüche 11 bis 14, dadurch gekennzeichnet, dass die erwähnten Mittel (22), die mit der Austrittsöffnung für Luft (16) des Behälters (1) zum Sperren des Durchgangs von Flüssigkeit in den Luftleitungen während der Füllung des Behälters mit Flüssigkeit verbunden sind, ein Rückschlagventil (36) umfasst, das auf dieser Austrittsöffnung (16) angeordnet ist und dessen Schliessorgan von dem Niveau der Flüssigkeit in dem Behälter (1) gesteuert wird, wobei die Austrittsöffnung für Luft, die durch die obengenannten Rohrleitung (18) mit dem Dekompressionssystem des Kompressors (10) verbunden ist und die Austrittsöffnung für Luft (16), die durch eine Rohrleitung mit der Zerstäubungsrampe (14) verbunden ist, sich stromabwärts von dem erwähnten Schliessorgan befinden.

16. Vorrichtung gemäss Anspruch 15, dadurch gekennzeichnet, dass die Rohrleitung, welche die Austrittsöffnung für Luft mit dem Dekompressionssystem des Kompressors verbindet, und die Rohrleitung, welche die Austrittsöffnung für Luft mit der Zerstäubungsrampe verbindet, Sicherheitsmittel (40) enthält, die zum Einfangen von Flüssigkeit eingerichtet sind, welche durch das Rückschlagventil (36) entweicht, wenn das letztere geschlossen ist, wenn der Behälter (1) sein maximales Füllniveau erreicht hat.

17. Vorrichtung gemäss Anspruch 16, dadurch gekennzeichnet, dass die obenerwähnten Sicherheitsmittel (14) je von einer dichten Umfassung gebildet sind, in deren Inneres die Rohrleitung (18 oder 39) mündet, welche von der Austrittsöffnung für Luft herkommt, wobei die Rohrleitung, welche diese Umfassung (41), sei es mit dem Kompressor (10), sei es mit der Zerstäubungsrampe (14), verbindet, mit einer Öffnung (42) verbunden ist, die in der Umschliessung (41) auf deren höchstem Niveau verbunden ist, wobei eine Ablassöffnung, die mit Mitteln zum Schliessen (43) versehen ist, an der Basis der Umfassung vorgesehen ist.

18. Vorrichtung gemäss Anspruch 17, dadurch gekennzeichnet, dass Mittel (44) in der Umfassung (41) zum Verschliessen der erwähnten Öffnung (42) vorgesehen sind, wobei diese Mittel zum Steuern durch Flüssigkeit, welche in der Umfassung enthalten ist, wenn sie ein Niveau erreicht, das unter dem der erwähnten Öffnung liegt, eingerichtet sind.

19. Vorrichtung gemäss irgendeinem der Ansprüche 12 bis 18, dadurch gekennzeichnet, dass die Mittel (23), welche mit der Einlassöffnung (11) für Flüssigkeit zum Injizieren eines Produkts in die in den Behälter (1) eingelassene Flüssigkeit während seiner Füllung von einer Leitung (45) gebildet sind, die mit einem Stutzen (46) verbunden ist, welcher mit dem Behälter (1) an der erwähnten Öffnung (11) verbunden ist und durch welchen die in den Behälter eingelassene Flüssigkeit zirkuliert, wobei das freie Ende des Stutzens mit einem Verschlussorgan (47) verbunden ist und ein Ventil (48) auf dem Stutzen zwischen der Öffnung (11) und diesem Organ (47) vorgesehen ist, wobei die vorerwähnte Leitung (45) in den Stutzen (46) zwischen diesem Verschlussorgan (47) und dem Ventil (48) mündet und an ihrem freien Ende (49) ein Mittel zur Verbindung mit einer Quelle für ein zu injizierendes Produkt und ein Verschlussventil (50), das zwischen diesem freien Ende (49) und der Verbindung der Leitung (45) mit dem Stutzen (46) liegt, umfasst.

20. Vorrichtung gemäss irgendeinem der Ansprüche 7 bis 19, dadurch gekennzeichnet, dass die Zerstäubungsrampe (14) für den Ausfluss von Flüssigkeit wenigstens ein starres Rohr (51) umfasst, dessen Achse sich im wesentlichen horizontal quer bezüglich dem Behälter (1) in der Zerstäubungsposition erstreckt, Zerstäubungsdüsen (2), die regelmässig über die Länge dieses Rohrs verteilt sind und sich senkrecht zu der Achse des letzteren erstrecken, ein starres Rohr (52) für den Ausfluss von Luft unter Druck, das parallel zu dem Flüssigkeitsrohr (51) angeordnet ist, wobei Öffnungen in dem Luftrohr in Entsprechung zu den Zerstäubungsdüsen angeordnet sind, wobei eine Verbindung (53) jede dieser Öffnungen mit einer Luftleitung (54) verbindet, die an der entsprechenden Zerstäubungsdüse befestigt ist, wobei diese Leitung (54) einen zu der Zerstäubungsdüse koaxialen Teil (55) aufweist und das freie Ende (50) dieses Teils einerseits oberhalb des Ansatzrohrs (3) der Düse (2) angeordnet und andererseits eingerichtet ist, dass die Luft unter Druck, welche in der Leitung zirkuliert, in der Richtung der Flüssigkeit injiziert wird, die in der Düse (2) zirkuliert.

21. Vorrichtung gemäss irgendeinem der Ansprüche 7 bis 20, dadurch gekennzeichnet, dass die Düsen (2) Ablenkdüsen sind.

22. Vorrichtung gemäss Anspruch 21, dadurch gekennzeichnet, dass die Achse der Düsen (2) einen Winkel in der Grössenordnung von 35° mit einer Horizontalebene einschliesst, welche durch die Achse des Flüssigkeitsausflussrohrs (51) der Zerstäubungsrampe hindurchgeht, wobei sich das Ansatzrohr (3) dieser Düsen auf einem Niveau befindet, das höher gelegen ist als dasjenige dieser Ebene.

23. Vorrichtung gemäss irgendeinem der Ansprüche 20 bis 22, dadurch gekennzeichnet, dass die Düsen (2) auf dem Flüssigkeitsausflussrohr (51) in abnehmbarer Weise angebracht sind, wobei die Verbindungen (53), welche das Luftausflussrohr (52) der Rampe mit den Luftleitungen (54) der Düsen verbinden, flexibel sind.

**Claims**

1. Method for spraying liquid, particularly agricultural spraying of suspended fertilizers, in which one injects a pressurized fluid into the feed line or pipe (2) of the streams, upstream of those nozzles (3) dispersing same, said method being characterized in that one injects the pressurized fluid along the flow direction of the liquid inside the line (2), along the axis thereof and under a pressure which is equal to the liquid pressure inside the line (2), injecting said fluid being performed adjacent the nozzles (3) dispersing the streams.

2. Spraying method as defined in claim 1, characterized in that the liquid to be spread is pressurized inside a tank (1) with pressurized air.

3. Spraying method as defined in either one of claims 1 and 2, characterized in that the fluid being injected into said line is pressurized air.

4. Spraying method as defined in claim 3, characterized in that one obtains that air being injected in said line (2), from the top portion (5) of the tank wherein the liquid is being pressurized.

5. Spraying method as defined in either one of claims 3 and 4, characterized in that for pressurizing the liquid, one feeds pressurized air to the bottom of the tank (1), in such a way as to have the pressurized air, part of which will be collected at the tank top (5) to be injected into the line (2), pass through the liquid contained inside the tank to cause stirring or mixing of said liquid.

6. Spraying method as defined in claim 5, characterized in that one feeds the pressurized air to the tank (1) through a pipe (7) slipped inside a tube (8) through the one end thereof, the tube being fastened to the bottom portion of the tank substantially in parallel relationship with the tank bottom, said pipe (7) with an outer diameter smaller than the inner diameter of the tube (8) to let the liquid flow freely between the pipe and the tube inner wall, being co-axial with the tube (8) and the length of that portion (9) thereof lying inside the tube (8), being shorter than the tube length, said latter length being shorter than the tank dimension as considered in parallel relationship with the tube axis and level with said axis.

7. Device for spraying a liquid, for the working of said method, and comprising a tight tank (1), such as a cylinder-shaped tank withstanding pressure and underpressure, at least one air compressor (10) with a large enough flow rate to pressurize the tank and supply the pressurized fluid, such as air, being injected into the feed line or pipe (2) for the streams, and provided with a relief system to lower the pressure inside the tank for filling same when the air supply to the tank is cut-off, means for driving the compressor (10), an air inlet (19) provided in the tank and connected through a pipe (20) to the compressor (10), a liquid inlet (11) provided in the tank, at least one spraying distributor (14), a liquid outlet (12) provided in the tank and connected through a pipe (13) to the spraying or spreading distributor (14), a pressurized-air outlet (16) provided on the uppermost tank portion, means (17) so arranged as to connect said air outlet (16) to the spraying distributor (14) and to inject air into the stream line (2), upstream of the nozzles (3) from the spraying distributor (14), and valves so arranged as to allow or prevent pressurized air and liquid flowing through said openings (11, 12, 16 and 19), said device being characterized in that said means (17) are so arranged as to inject the pressurized fluid along the liquid flow direction inside the line (2), along the axis thereof, under a pressure which is equal to the liquid pressure, and adjacent those nozzles (3) dispersing the streams.

8. Device as defined in claim 7, characterized in that said air outlet (16) is connected through a line (18) to the relief system of the compressor (10).

9. Device as defined in either one of claims 7 and 8, characterized in that the tank (1) comprises means (21) arranged inside the tank and in the lowermost portion thereof, to distribute that pressurized air being fed to the tank, inside the liquid contained therein, said means (21) being connected to said air inlet (19).

10. Device as defined in any one of claims 7 to 9, characterized in that it comprises, cut into said pipe (13) connecting the liquid outlet (12) provided in the tank to the spraying distributor (14), means (21') so arranged as to filter the liquid being fed to the spraying distributor (14) and to distribute the liquid therein.

11. Device as defined in any one of claims 7 to 10, characterized in that it comprises means (22) associated with said pressurized-air outlet (16) and so arranged as to prevent as the tank (1) is being filled with liquid by underpressurizing same, said liquid passing through said outlet (16), to the means (17) connecting the tank (1) to the spraying distributor (14), and into the pipe (18) connecting the tank to the relief system of the compressor (10).

12. Device as defined in any one of claims 7 to 11, characterized in that it comprises means (23) associated with the liquid inlet (11) to the tank (1), and so arranged as to inject a product into the liquid being fed to the tank (1) when filling same.

13. Device as defined in any one of claims 9 to 12, characterized in that said means (21) so arranged as to distribute the pressurized air being fed to the tank (1), inside the liquid contained therein, comprise on the one hand a tube (8) secured inside the tank (1) adjacent the bottom thereof, said tube (8) extending substantially in parallel relationship with the tank axis and the length thereof being shorter than the tank length to let the liquid flow freely inside the tube, and on the other hand a pipe (7) connected to the tank air inlet (19), said pipe (7) lying with that end thereof removed from said inlet (19), inside the tube (8), that portion (9) from said pipe (7) lying inside the tube from the one end thereof, being co-axial with the tube, the outer cross-section from the pipe (7) being smaller than the inner cross-section of the tube (8) to let the liquid flow freely between the pipe outer wall and the tube inner wall, the length of that portion (9) from the pipe (7) lying inside the tube being shorter than the tube length.

14. Device as defined in any one of claims 10 to 13, characterized in that said means (21') cut in that pipe (13) connecting the liquid outlet (12) provided in the tank to the spraying distributor (14), comprise a sealed enclosure (24) the axis of which lies in a substantially vertical plane, an opening (25) provided on the enclosure top wherewith connect, on the one hand, the pipe (13) originating from the tank liquid outlet and, on the other hand, a tube-shaped filter or screen (26) extending inside the enclosure in parallel relationship with the axis thereof, from the opening (25) up to adjacent the enclosure bottom, at least one tube (27) with the axis thereof parallel to the enclosure axis, so secured inside same as to have the one end thereof lying a short distance away from the enclosure bottom and the other end thereof opening outside the enclosure, at the top thereof, the pipe (13) connecting the enclosure (24) to the spraying distributor (14) being joined to said latter end, said tube (27) having one opening (30) provided in the wall thereof and lying inside the enclosure (24), adjacent the top thereof, the cross-section of said opening (30) being smaller than the inner cross-section of the tube (27), a drain opening (33) for the enclosure (24), closable by a valve (34) being provided at the bottom of said enclosure.

15. Device as defined in any one of claims 11 to 14, characterized in that said means (22) associated with the air inlet (16) of the tank (1) to prevent the liquid entering air circuits as the tank is being filled with liquid, comprise a vacuum-trap flap (36) arranged on said outlet (16) and the closure member of which is controlled by the liquid level inside the tank (1), the air outlet connected through said pipe (18) to the relief system of the compressor (10) and the air outlet (16) connected through a pipe to the spraying distributor (14) lying downstream of said closure member.

16. Device as defined in claim 15, characterized in that the pipe connecting the air outlet to the compressor relief system and the pipe connecting the air outlet to the spraying distributor comprise safety means (40) so arranged as to collect any liquid which might escape through the vacuum-trap flap (36) when same is closed when the tank (1) has reached the highest filling level thereof.

17. Device as defined in claim 16, characterized in that said safety means (40) are each comprised of a sealed enclosure (41) wherein opens the pipe (18 or 39) originating from the air outlet, the pipe connecting said enclosure (41) either to the compressor (10), or to the spraying distributor (14) being connected to an opening (42) provided in the enclosure (41) at the top level thereof, a drain provided with a closure means (43), being provided at the enclosure bottom.

18. Device as defined in claim 17, characterized in that means (44) are provided in the enclosure (41) to closs-off said opening (42), said means being so arranged as to be controlled by the liquid contained inside the enclosure when same reaches a lower leven than said opening.

19. Device as defined in any one of claims 12 to 18, characterized in that the means (23) associated with the liquid inlet (11) to inject a product into the liquid being fed to the tank (1) when filling same, are comprised of a pipe (45) connected to a nozzle (46) secured to the tank (1) about said inlet (11) and wherethrough flows the liquid fed to the tank, the nozzle free end being provided with a closure member (47) and a valve (48) being provided on the nozzle between the inlet (11) and said member (47), said pipe (45) opening into the nozzle (46) between said closure member (47) and the valve (48), and comprising on the free end (49) thereof, a means for connecting to a source of product to be injected and a closure valve (50), located between said free end (49) and the connection of the pipe (45) to the nozzle (46).

20. Device as defined in any one of claims 7 to 19, characterized in that the spraying distributor (14) for the liquid flow, comprises at least one rigid tube (51) with a substantially horizontal axis extending cross-wise to the tank (1) in spraying position, spraying nozzles (2) uniformly distributed along said tube and extending at right angle to the axis thereof, a rigide tube (52) for the pressurized air-flow, arranged in parallel relationship with the liquid tube (51), openings provided in the air tube to correspond to the spraying nozzles, a connector (53) joining each said openings with an air pipe (54) fastened to the corresponding spraying nozzle, said pipe (54) having a portion (55) coaxial with the spraying nozzle and the free end (50) from said portion lying on the one hand upstream of the nose-piece (3) from the nozzle (2), and on the other hand so arranged as to have the pressurized air flowing through the pipe be injected in the direction of the liquid flowing through the nozzle (2).

21. Device as defined in any one of claims 7 to 20, characterized in that said nozzles (2) are mirror nozzles.

22. Device as defined in claim 21, characterized in that the axis of the nozzles (2) makes an angle about 35 degrees with a horizontal place which passes through the axis of the tube (51) for liquid flow from the spraying distributor, the nose-piece (3) from said nozzles lying on a higher level than said plane.

23. Device as defined in any one of claims 20 to 22, characterized in that the nozzles (2) are removably mounted on said liquid-flow tube (51), said connectors (53) connecting the air-flow tube (52) from the distributor to the nozzle air pipes (54), being flexible.

FIG.1

FIG.2

FIG. 3

FIG. 4

FIG. 5